# EUROPEAN PATENT APPLICATION

(11) **EP 1 895 375 A1**
(43) Date of publication of application: **05.03.2008**
(21) Application number: 05750915.0
(22) Date of filing: 20.06.2005
(51) Int. Cl.: G05B 19/4097

(54) **MACHINING STEP GENERATION DEVICE**

(71) Applicant: FUJITSU LIMITED, Kawasaki-shi, Kanagawa 211-8588 (JP)
(72) Inventor: TAKAHASHI, Hiroshi, c/o FUJITSU LIMITED, Kawasaki-shi, Kanagawa 2118588 (JP); YAMAGUCHI, Shingo, c/o FUJITSU LIMITED, Kawasaki-shi, Kanagawa 2118588 (JP); TAKEUCHI, Yoshio, c/o FUJITSU LIMITED, Kawasaki-shi, Kanagawa 2118588 (JP)
(74) Representative: Ward, James Norman
(86) International application number: PCT/JP2005/011290
(87) International publication number: WO 2006/137120

(57) **Abstract**

To a machining shape database, machining shapes are registered. A machining shape recognition function makes a comparison between CAD data from a CAD and the registered machining shapes, and extracts a matching registered machining shape. A machining method database stores information required to identify the machining method of a machining shape corresponding to the registered machining shape. Information about the machining method of the machining shape extracted by the machining shape recognition function is extracted by a machining step determination function from the machining method database, and machining methods are arranged in suitable order, whereby a machining step is generated.

## Description

### Technical Field

The present invention relates to a machining step generating apparatus for generating a manufacturing machining step to manufacture a component or a metal mold with a machining center, which is controlled by an NC program, by analyzing CAD data to extract a machining shape, and by searching a database for suitable machining methods to combine the methods.

### Background Art

Conventionally, when a component or a metal mold is manufactured by using a machining center, an operator determines a machining method. The operator sets a machining method or the cutting condition of a tool with CAM (Computer Aided Manufacturing) according to the determined machining method, and causes an NC program for controlling the machining center to be calculated. The machining center is controlled by the output NC program, and a material is machined with a specified tool.

The operator utilizes machining know-how such as an experience, knowledge, etc. in order to determine a machining method. To verify whether or not the determined machining method is adequate, the output NC program is simulated. Also for the analysis of simulation results, machining know-how such as an experience, knowledge, etc. of an operator are required. To make a comparison among different machining methods, an NC program must be recalculated by changing the settings of CAM. As described above, the labor and the machining know-how of an operator are essential to repeat a series of trials and errors. In a case where a computer makes trials and errors instead, there are methods such as a method for creating databases of tools and materials, for making trials and errors by combining information registered to the databases, and for determining a combination of tools with which machining time becomes the shortest. However, such a method requires an enormous amount of time.

Machining know-how for creating an NC program includes the determination of a machining method, the determination of a tool to be used, the cutting condition of a tool, and the like. The machining method is built by combining a machining shape such as "planing", "sidemilling", "drilling", "counterboring", etc., a tool such as a "ball end mill", a "flat end mill", etc., a tool operation such as "contour machining", "scanning line machining", etc. As one of the most typical methods with which a computer aids an operator to make the settings of CAM in order to create an NC program by using machining know-how, automatic specification of the cutting condition of a tool based on a database can be cited. This is a method with which a computer aids the specification of an optimum cutting condition based on a combination of a tool, a material, etc. instead of the input of a cutting condition to a computer by an operator. There is also a method with which a computer aids the optimization of a cutting condition within a database. These automatic specification, optimization, etc. of a cutting condition are originally numericalvalueinformation,and relatively work well with a computer. Therefore, many systems have been developed.

However, not so many computer aided systems for determining a machining method or a tool are not developed under the present circumstances. The first cause is that these pieces of machining know-how are ambiguous and difficult to be put into numerical values due to a lot of complicated determination factors. For example, the machining shape "planing" can be machined with diverse tools such as a "ball end mill", a "flat end mill", a "radius end mill", etc. Even if the "flat end mill" is determined as a tool, the size of the tool must be determined. Additionally, if a groove having a width of 10 mm is cut with a tool having a diameter of 10 mm, it results in "grooving". However, if the groove is cut with a tool having a diameter of 5 mm, it results in "side milling". It was not easy to put such ambiguous and complicated determination factors of a machining method into numerical values, and to implement a system which outputs results similar to those of a man.

As conventional techniques, the techniques disclosed by Patent Document 1 to 4 exist. Patent Document 1 discloses a technique for storing machining procedures for a shape to be machined and a standard machining shape, which are classified by machining attribute data for each machining based on CAD/CAM data, and for searching for machining attribute data by using a machining procedure or a machining tool as a conditional expression. Patent Document 2 discloses a technique for generating a machining program in accordance with a program generation algorithm corresponding to a specified step based on an input cutting condition. Patent Document 3 discloses a technique for deriving an ideal machining condition from the shape of a portion to be electrical-discharge-machined based on judgment reference data, and for determining the shape and the size of an electrode and a machining program based on a combination of machining condition data. Patent Document 4 discloses a technique for storing shape data such as a concave portion, etc., material data, tool data, andmachiningcondition data, for generating data for a combination of selected tools, and for generating an NC program of data the machining time of which is the shortest.
Patent Document 1: Japanese Patent Application Publication No. H5-177505
Patent Document 2: Japanese Patent Application Publication No. 2002-132313
Patent Document 3: Japanese Patent Application Publication No. H5-169348
Patent Document 4: Japanese Patent Application Publication No. 2004-306202

### Disclosure of Invention

An obj ect of the present invention is to provide a machining step generating apparatus that can implement highly efficient and highly precise machining by automating a method for determining a machining shape or a machining method, and by outputting an NC program according to a determined method.

The machining step generating apparatus according to the present invention comprises storing unit for making a correspondence between shape data and a machining method used when machining is made to implement the shape, and for storing the shape data and the machining method, shape data detecting unit for receiving shape data of a product to be machined, and for detecting whether or not shape data corresponding to the received shape data is stored in the storing unit, machining method obtaining unit for obtaining a machining method corresponding to the detected shape data from the storing unit, and machining step generating unit for generating data, which specifies a machining step of the product to be machined, by combining one or more machining methods obtained by the machining method obtaining unit.

According to the present invention, the determination of a machining step, which is conventionally made by a man, is automated, whereby the labor of an operator, which is required to determine the machining step, can be reduced, and highly precise machining can be implemented regardless of the level of skill of an operator.

### Brief Description of Drawings

Fig. 1 explains a method for determining a combination of machining steps;
Fig. 2 shows a machining step generating apparatus according to a preferred embodiment of the present invention, and also shows the course of a process of determining a machining step from CAD data, and outputting an NC program to a machining center;
Fig. 3 shows a process flow of a machining shape recognition function 11;
Fig. 4 is a schematic (No. 1) explaining a machining shape database 15;
Fig. 5 is a schematic (No. 2) explaining the machining shape database 15;
Fig. 6 is a schematic (No. 3) explaining the machining shape database 15;
Fig. 7 is a schematic (No. 4) explaining the machining shape database 15;
Fig. 8 is a schematic (No. 5) explaining the machining shape database 15;
Fig. 9 is a schematic (No. 6) explaining the machining shape database 15;
Fig. 10 shows a process flow of a machining step determination function 12;
Fig. 11 is a schematic (No. 1) explaining a machining method database 16;
Fig. 12 is a schematic (No. 2) explaining the machining method database 16; and
Fig. 13 shows an example of parameters passed from the machining step determination function 12 to a tool path generation function 13.

### Best Mode of Carrying Out the Invention

If a product such as a component, a metal mold, etc. is machined from a material, the machining is normally divided into a plurality of machining steps such as a "rough machining step", a "semi-finishmachining step", a "finishmachining step", etc., and a machining method such as "planing", "side milling", "drilling", "counter boring", etc. is applied to the machining steps depending on a machining shape. Then, a combination of machining methods, which can finish the product with highest efficiency and high precision, is determined, and an NC program for controlling a machining center is output.

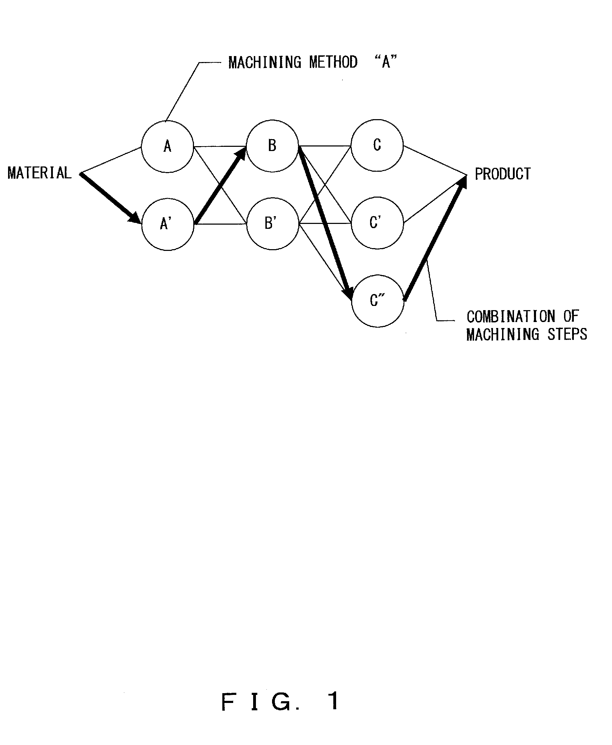

Fig. 1 explains a method for determining a combination of machining steps.

Assume that the machining steps are divided into three stages. Machining methods A and A' , machining methods B and B' , and machining methods C, C' and C" respectively exist in first, second, and third stages. There are many options for selecting these machining methods, and accordingly, also the number of possible combinations of the machining steps is large. One optimum machining step must be selected from among these steps. In Fig. 1, a machining step for manufacturing a product by machining a material with the machining method A', next with the machining method B, and lastly with the machining method C" is selected.

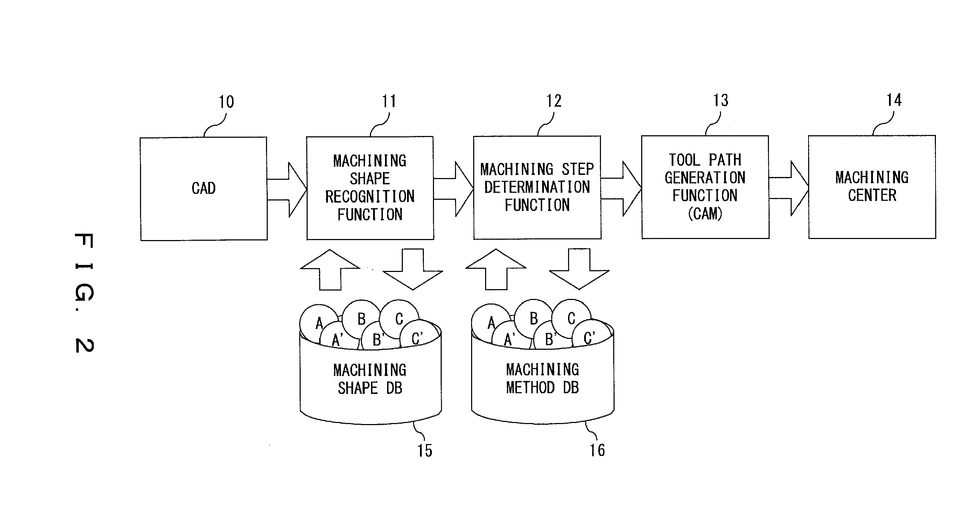

Fig. 2 shows a machining step generating apparatus according to a preferred embodiment of the present invention, and also shows the course of a process of determining a machining step from CAD data, and outputting an NC program to a machining center.

The machining step generating apparatus according to the preferred embodiment of the present invention is configured with a machining shape recognition function 11 for capturing CAD data output from a CAD 10 and for recognizing a machining shape, a machining shape database 15 for storing machining shapes, a machining shape determination function 12 for determining a machining step by combining machining methods based on machining shape information, a machining method database 16 for storing machining methods, and a tool path generation function 13 for generating an NC program, which controls a machining center, from machining step information.

Initially, the CAD 10 captures created three-dimensional data into the shape recognition function 11. The shape recognition function 11 makes a comparison between registered machining shapes and the captured three-dimensional data by making a connection to the machining shape database 15, and searches for a matching machining shape. The machining step determination function 12 searches the matching machining shape information for a machining method to be applied by making a connection to the machining method database 16, and determines a combination of searched machining methods, considering efficiency and precision. The machining center 14 is controlled by an NC program that the tool path generation function 13 generates based on the determined machining step information, and a product is manufactured.

Here, as the tool path generation function 13, an existing CAM function is available. The corresponding CAM function may be incorporated into the machining step generating apparatus according to the preferred embodiment of the present invention, or a separately arranged CAM may be made to execute a tool path generation process by automatically inputting data to the CAM. In either case, the tool path generation function 13 can be implemented with an existing device. Therefore, further details are not particularly provided in the following description.

The machining shape database 15 and the machining method database 16 may be configured within the same device although they are described as separate devices.

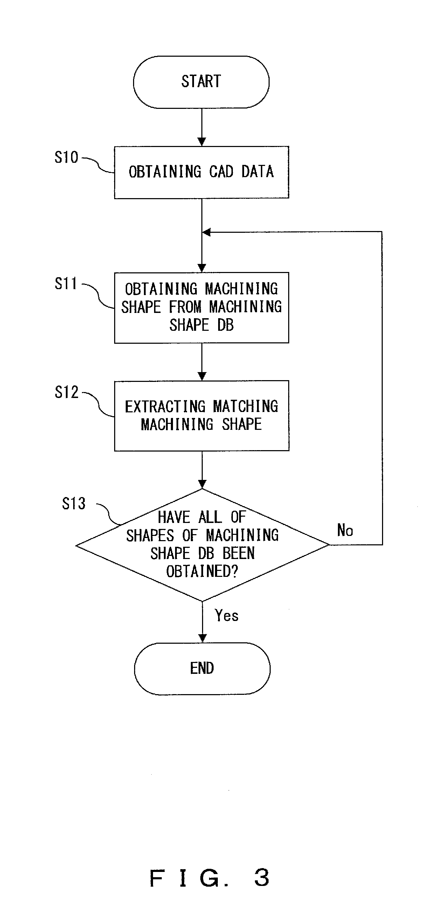

Fig. 3 shows a process flow of the machining shape recognition function 11.

The machining shape recognition function 11 is a function to extract a shape, which matches a shape defined in the machining shape database 15, from captured CAD data.

The CAD data is obtained, a comparison is made with a machining shape obtained from the machining shape database 15, and a matching machining shape is extracted. This series of operations is repeated until they are performed for all of shapes of the machining shape database 15. Extracted machining shapes are passed to the machining step determination function 12.

As shown in Fig. 3, the machining shape recognition function 11 obtains CAD data in step S10. Then, in step S11, the machining shape recognition function 11 obtains machining shapes from the machining shape database 15, and extracts a machining shape, which matches the shape of the CAD data, from among the machining shapes obtained from the machining shape database 15 in step S12. In step S13, the machining shape recognition function 11 judges whether or not a match with the shape of the CAD data has been detected for all of shapes of the machining shape database 15. I f the match has not been detected yet, the process is repeated. Or, if the match has been detected, the process is terminated.

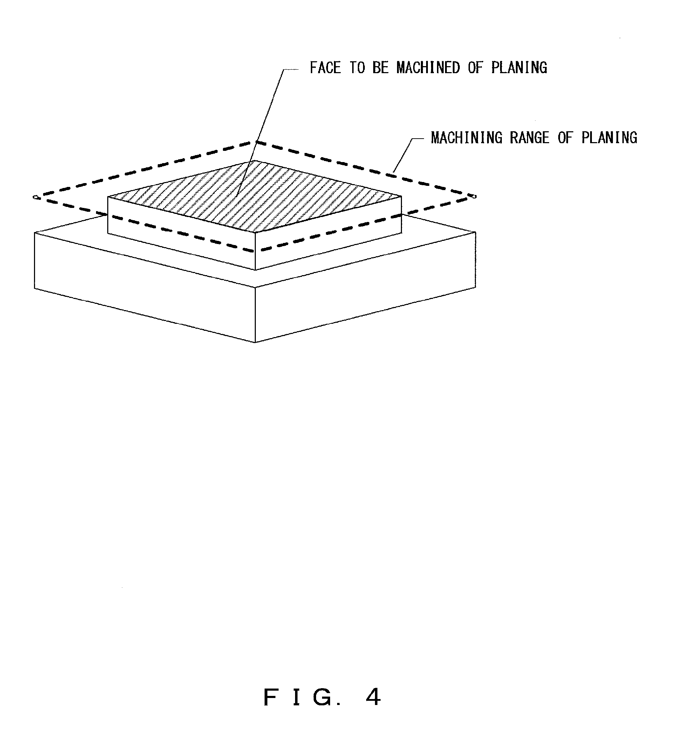

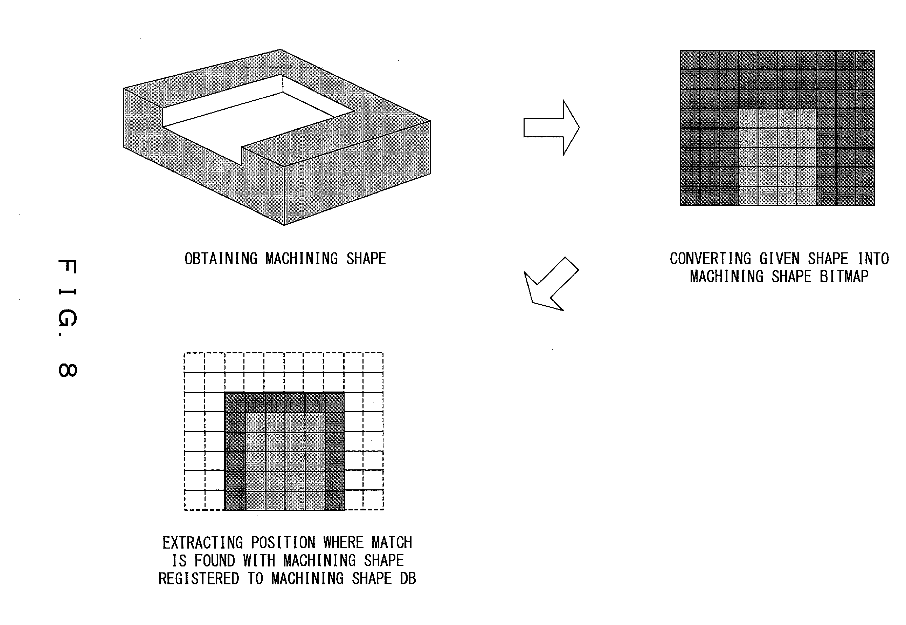

Figs. 4 to 9 explain the machining shape database 15.

The machining shape database 15 stores machining shapes. The stored machining shapes include two types, which are classified into a machining shape extraction algorithm and a machining shape bitmap.

The machining shape extraction algorithm is, for example, to define the machining shape "planing" shown in Fig. 4 with an algorithm. Since "planing" is applied to a plane, a planar face is targeted. Additionally, with "planing", machining is made to cause a tool to protrude from a target planar face. Therefore, it is necessary that a tool can protrude from a face to be machined by 50 mm or more at the time of machining. Accordingly, an algorithm for extracting a planar face, which can secure a machining range outward by 50 mm or more, is defined.

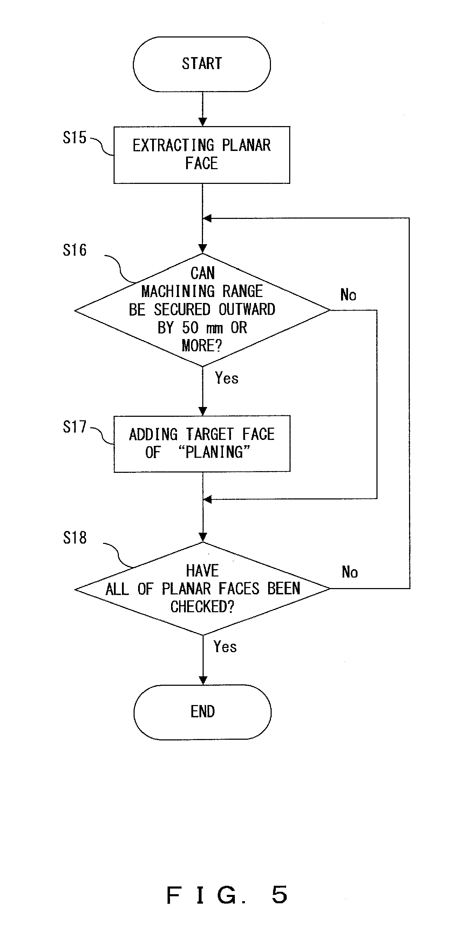

The machining shape extraction algorithm of "planing" becomes that shown in Fig. 5. Since "planing" targets a plane, a planar face is initially extracted (step S15). Then, it is examined whether or not the machining range of the planar face can be secured outward by 50 mm or more (step S16). Here, if the machining range can be secured, this planar face is added as a target face of "planing" (step S17). Or, if the machining range cannot be secured, the next face is examined. The examination is made to all of extracted planar faces (step S18), whereby a target face of "planing" can be extracted.

Then, a machining shape extraction algorithm is created by defining a machining shape such as "side milling", "drilling", "counter boring", etc. with a similar method, and put into a database.

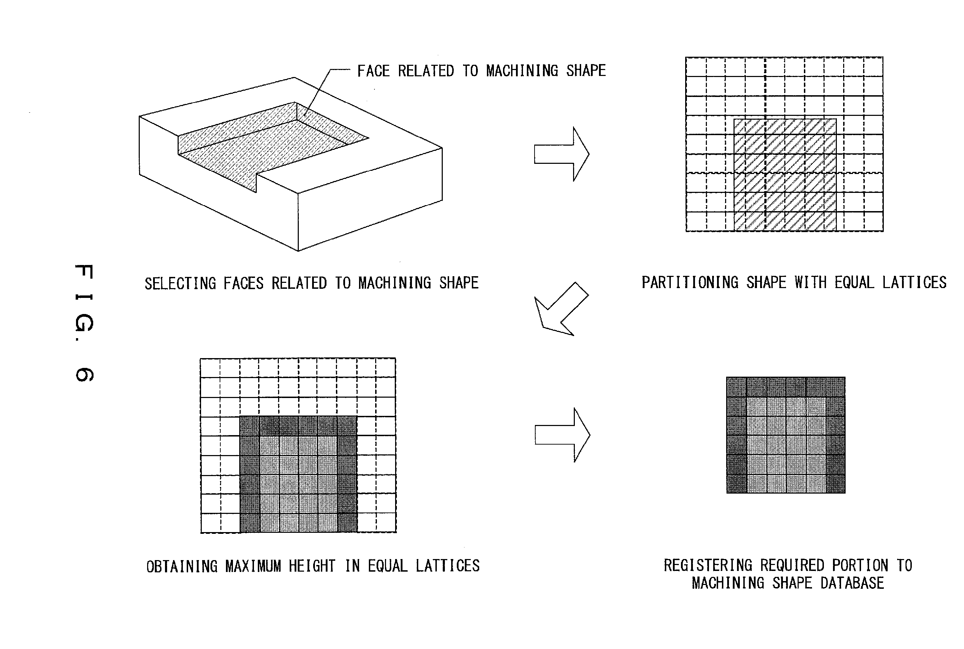

With the machining shape bitmap, a machining shape, which is not defined with a machining shape extraction algorithm, is defined. If an operator newly registers a machining shape, it is difficult to construct an algorithm and register the algorithm to the machining shape database. Therefore, the machining shape bitmap is used. With the machining shape bitmap, a user selects a face related to a machining shape in order to register the machining shape of Fig. 6 to the machining shape database 15. The selected face is partitioned with equal lattices, etc., and height information is extracted. The height information is stored in the database as machining shape bitmap information.

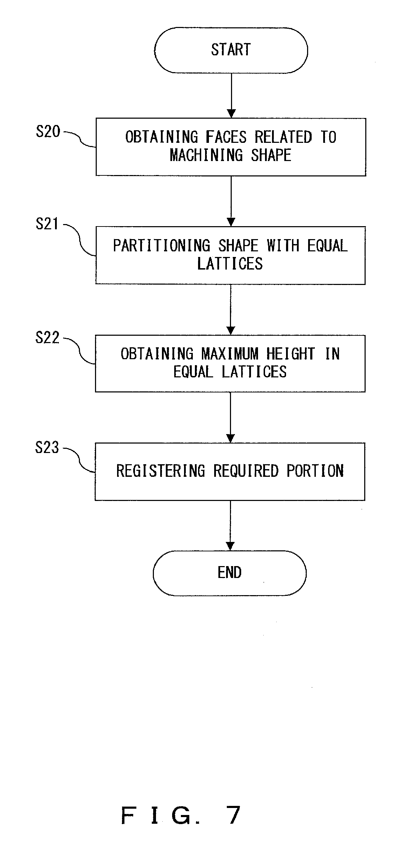

As shown in Fig. 7, a face related to a machining shape is obtained in step S20, the shape is partitioned with equal lattices in step S21, the maximum height in the equal lattices is obtained in step S22, and a necessary portion is registered to the machining shape database 15 in step S23.

To recognize a registered machining shape, apositionwhere the machining shape bitmap, into which a machining shape given as CAD data is converted, and a machining shape bitmap, which is registered to the machining shape database 15, match is searched. A matching position is passed to the machining shape recognition function 11.

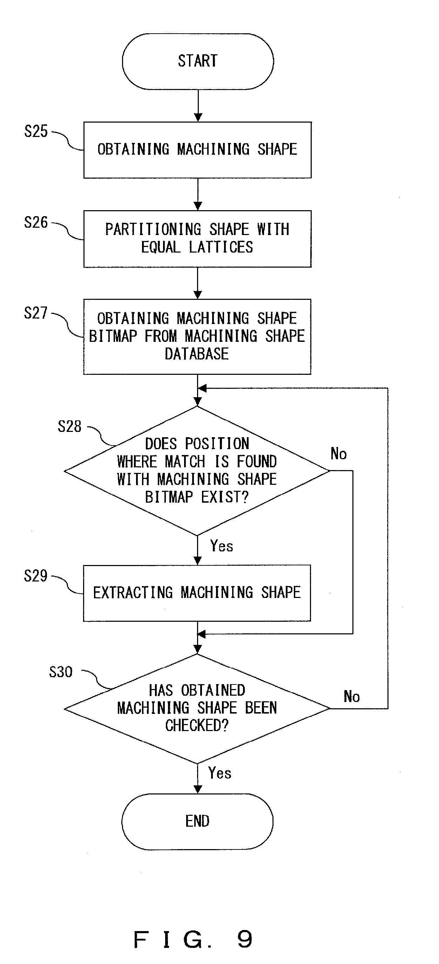

As shown in Fig. 9, a machining shape is obtained in step S25, the machining shape is partitioned with equal lattices in step S26, a machining shape bitmap is obtained from the machining shape database 15 in step S27, and it is judged in step S28 whether or not a position where the machining shape bitmap of the machining shape database 15 and the machining shape obtained from CAD data match exists. If a match is found in step S28, the machining shape is extracted in step S29, and the process proceeds to step S30. Or, if the match is not found, the process proceeds to step S30 without performing any operations. In step S30, it is judged whether or not a comparison has been made between the machining shape obtained as the CAD data and all of machining shape bitmaps of the machining shape database 15. If the comparison has not been made yet in step S30, the process is repeated in and after step S28. Or, if the comparison has been made, the process is terminated.

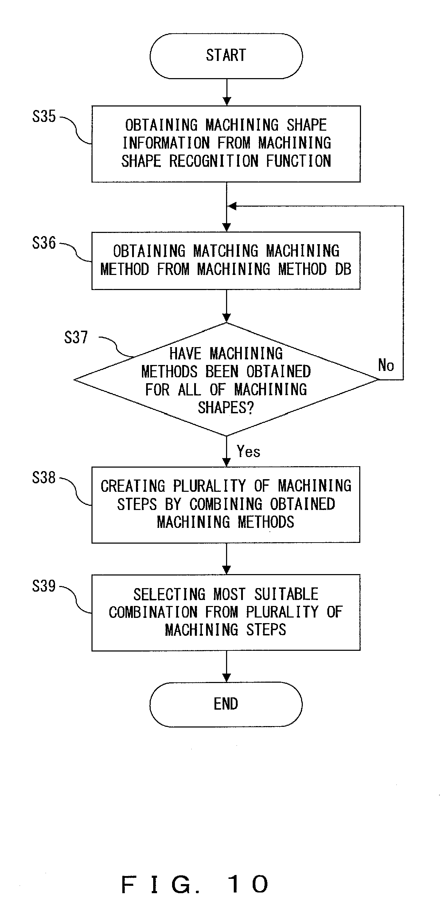

Fig. 10 shows a process flow of the machining step determination function 12.

The machining step determination function 12 is a function to select a suitable machining method, from the machining method database 16, for a machining shape recognized by the machining shape recognition function 11, to construct machining steps in accordance with machining rules, and to output information required to generate a tool path.

A machining shape recognized by the machining shape recognition function 11 is obtained, and a machining method suitable for the machining shape is obtained from the machining method database 16. A machining shape and a machining method normally make a pair although this depends on a situation. Otherwise, a machining method is registered for a machining shape depending on a situation. After machining methods are obtained from the machining method database 16 for all of machining shapes obtained from the machining shape recognition function 11, a plurality of machining steps are created by combining the machining methods. The most suitable combination is selected from among the plurality of created machining steps, and the machining step is output.

As shown in Fig. 10, machining shape information is obtained from the machining shape recognition function 11 in step S35, a machining method corresponding to the obtained machining shape is obtained from the machining method database 16 in step 536. In step 537, it is judged whether or not machining methods have been obtained for all of machining shapes. If the result of the judgment in step 537 is "NO", the process returns to step S36. If the result of the judgment in step S37 is "YES", a plurality of machining steps are created by combining the obtained machining methods. Then, in step S39, the most suitable combination is selected from among the plurality of machining steps.

A machining step is created by combining machining methods based on machining rules. The machining rules are the set items required depending on a j ob site or an operator running the system, and the type of a product. The machining rules used at this time are, for example, the type or the priority of an available tool, the priority or the unavailability of machining information, and the like. A plurality of machining steps are created by combining machining methods based on the machining rules. The plurality of machining steps are executed for a region where machining shapes overlap.

Then, the most suitable combination of machining methods is selected from among the plurality of machining steps based on the machining rules. The machining rules used at this time are items such as whether priority is assigned to either time or safety, and the like. The machining rules are assumed to be input by an operator with the use of a keyboard, etc. Additionally, a machining rule, which assigns priority to time, is to shorten machining time by increasing the amount of work of a tool per unit time. Furthermore, a machining rule, which assigns priority to safety, is to prevent a tool from being broken by reducing the amount of work of a tool per unit time. The machining rule, which assigns priority to safety, is effective for cases such as a case where a machining device is operated without an operator in the nighttime, whereas the machining rule, which assigns priority to time, is effective for cases such as where machining is made under the monitoring of a man. The size of a tool, and the like, which is information for judging such machining rules, is assumed to be stored in the machining method database 16 in correspondence with a machining method.

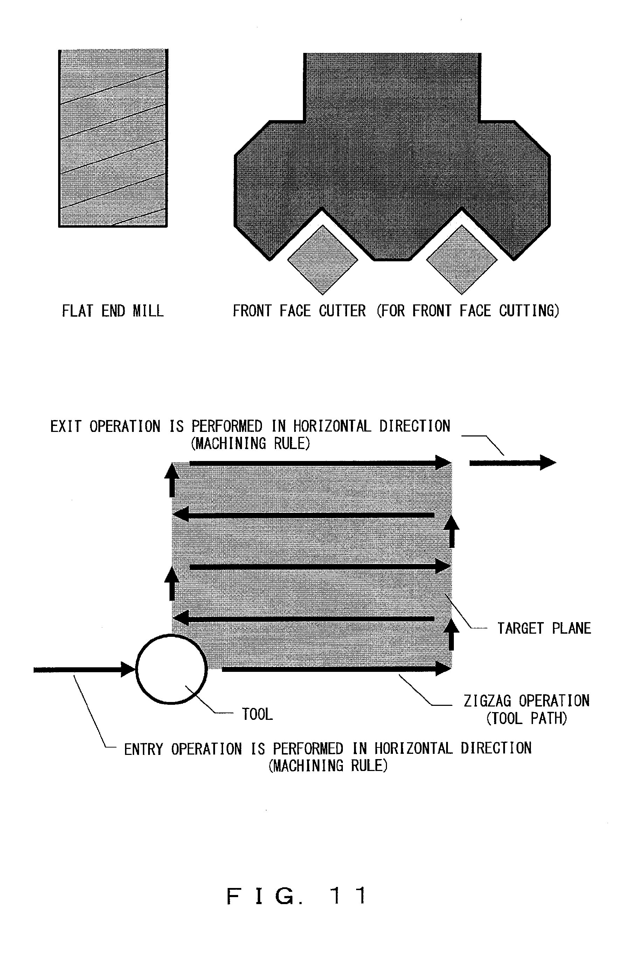

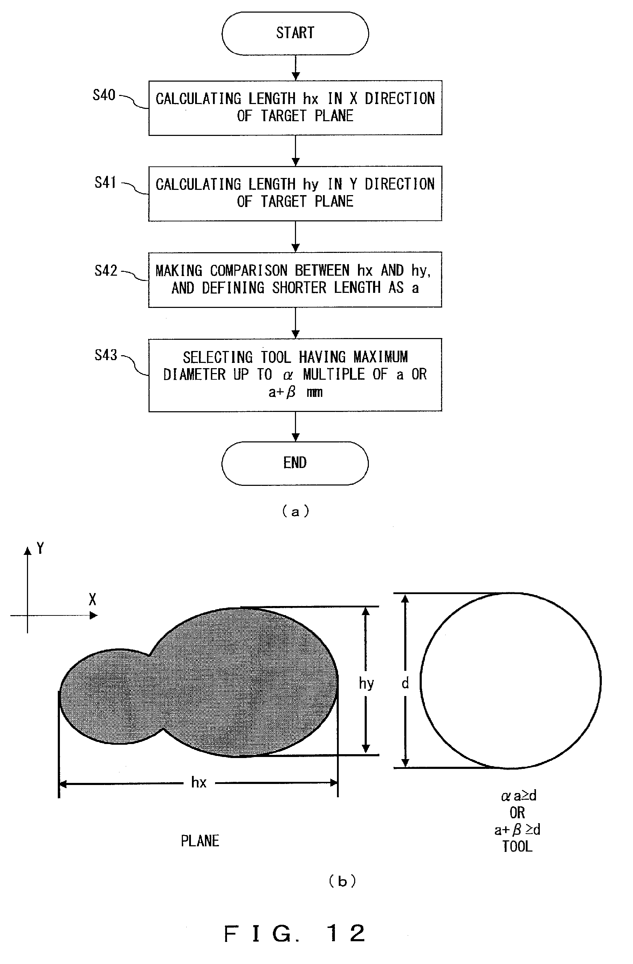

Figs. 11 and 12 explain the machining method database 16.

The machining method database 16 stores machining methods. The stored machining methods respectively make a pair with a machining shape, and store information for generating an NC program with the tool path generation function 13, or an algorithm for determining a tool.

For example, the machining method "planing", which corresponds to the machining shape "planing", is composed of a method for determining a target machining shape, the type of a tool to be used, the diameter of a tool to be used, the path of a tool to be used, and a machining rule . The target machining shape is assumed to be the "planing" at this time because the machining method is the method "planing" corresponding to the machining shape "planing" . The type of a tool to be used is assumed to be a flat end mill (the upper left of Fig. 11) or a front face cutter (the upper right of Fig. 11), and the path of a tool to be used is assumed to be zigzag (the bottom of Fig. 11) . The machining rule is assumed to be a rule under which entry and exit operations are performed in a direction horizontal to a target plane. An algorithm for determining the diameter of a tool is shown in Fig. 12A. If a plane shown in Fig. 12B is given, a length hx in X direction, and a length hy in Y direction are initially calculated (steps S41 and S42). A comparison is made between hx and hy, and a shorter length is assumed to be a (step S42) . At this time, a tool having the maximum diameter within a range of an α multiple of a or a range of a+β mm is selected as a tool (step S43) .

Then, a machining method is created by defining a machining method such as "side milling", "drilling", "counter boring", etc. with a similar method, and put into the database.

In this way, various types of parameters, which the tool path generation function 13 requires to generate an NC program needed to drive the machining center 14, are prepared.

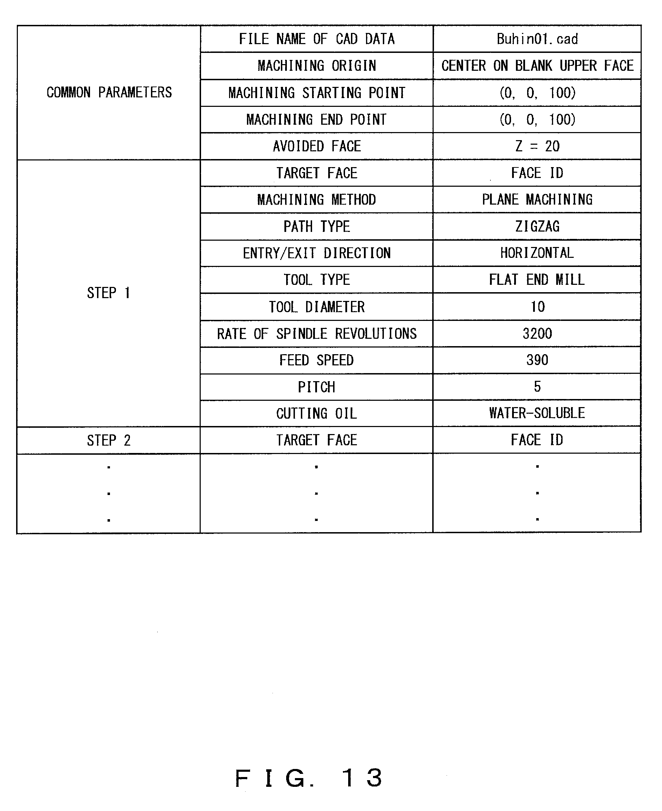

Fig. 13 shows an example of parameters passed from the machining step determination function 12 to the tool path generation function 13.

As parameters common to all of machining steps for manufacturing a shape represented by one piece of CAD data, the file name of CAD data, the position of an origin when machining is made, a machining starting point, a machining end point, and an avoided face are set. As parameters in the respective steps, the ID of a target face, a machining method, the type of a path, the direction of entry/exit, the type of a tool, the diameter of a tool, the rate of spindle revolutions of a tool, the feed speed of a tool, the pitch of a tool, and cutting oil used for machining are set.

The tool path generation function 13 generates an NC program for controlling the machining center, which machines a material into a product, based on CAD data input to the machining step generating apparatus, and information output from the machining step determination function 12. This tool path generation function 13 has functions similar to a conventionally used CAM. Accordingly, a universal CAM may be used as a replacement for this tool path generation function 13.

The machining center 14 is a numerical value control (NC) machine comprising the automatic replacement function of a tool, and can perfectly or almost perfectly perform a series of diverse operations such as milling, drilling, boring, tapping, etc. in an automatic manner with the installation of workpiece, which is made once. If the tool path generation function 13 can output an NC program unique to the machining center 14, a universal machining center 14 can be used.

## Claims

1. A machining step generating apparatus, comprising:
storing means for making a correspondence between shape data and a machining method used when machining is made to implement the shape, and for storing the shape data and the machining method;
shape data detecting means for receiving shape data of a product to be machined, and for detecting whether or not shape data corresponding to the received shape data is stored in the storing means;
machining method obtaining means for obtaining a machining method corresponding to the detected shape data from the storing means; and
machining step generatingmeans for generating data, which specifies a machining step of the product to be machined, by combining one or more machining methods obtained by the machining method obtaining means.

2. The machining step generating apparatus according to claim 1, wherein said machining step generating meansgeneratesdata,which specifies one or more machining steps, by combining the one or more machining methods, and selects data specifying one machining step, which satisfies a predetermined condition, from among the generated data.

3. The machining step generating apparatus according to claim 2, wherein
the predetermined condition is specified by a user.

4. The machining step generating apparatus according to claim 1, wherein
the data, which specifies the machining step, is converted into an NC program, and the NC program is executed by a machining center.

5. A machining step generating method, comprising the steps of:
storing shape data and a machining method by making a correspondence between the shape data and the machining method used when machining is made to implement the shape;
receiving the shape data of a product to be machined, and detecting whether or not shape data corresponding to the received shape data is stored in the shape data stored in the storing step;
obtaining the machining method corresponding to the detected shape data from the machining method stored in the storing step; and
generating data, which specifies a machining step of the product to be machined, by combining one or more machining methods obtained by the machining method obtaining step.

6. A machining step generating program for causing a computer to implement:
storing means for making a correspondence between shape data and a machining method used when machining is made to implement the shape, and for storing the shape data and the machining method;
shape data detecting means for receiving shape data of a product to be machined, and for detecting whether or not shape data corresponding to the received shape data is stored in the storing means;
machining method obtaining means for obtaining a machining method corresponding to the detected shape data from the storing means; and
machining step generating means for generating data, which specifies a machining step of the product to be machined, by combining one or more machining methods obtained by the machining method obtaining means.

7. A database used for a process of judging whether or not a shape to be machined matches predetermined shape data, comprising:
storing means for storing a program for judging whether or not a shape represented by the shape data exists in the shape to be machined by judging whether or not a machining condition, which is required when the shape represented by the shape data is machined, is satisfied in the shape to be machined.

8. The database according to claim 7, wherein
the storing means partitions a bitmap of a shape set by a user with equal lattices, and stores data where height of the shape is set in each of the equal lattices.

9. The database according to claim 8, wherein
whether or not data generated from the bitmap matches a shape to be machined is judged after the shape data to be machined is partitioned with equal lattices, and converted into data which sets height in each equal lattice.

10. The database according to claim 7, wherein
the database stores information about a machining method used when the shape represented by the shape data is machined, in correspondence with the shape data.
